# EUROPÄISCHE PATENTSCHRIFT

(11) **EP 1 343 652 B1**
(45) Veröffentlichungstag und Bekanntmachung des Hinweises auf die Patenterteilung: **19.07.2006**
(21) Anmeldenummer: 01990294.9
(22) Anmeldetag: 13.12.2001
(51) Int. Cl.: B60K 37/06, H01H 9/18, G09F 13/06

(54) **VERFAHREN ZUR HERSTELLUNG EINES BEDIENELEMENTS UND BEDIENELEMENT**
METHOD FOR PRODUCING AN OPERATIONAL CONTROL, AND OPERATIONAL CONTROL
PROCEDE DE PRODUCTION D'UN ELEMENT DE REGLAGE ET ELEMENT DE REGLAGE

(30) Priorität: 15.12.2000 DE 10062554
(43) Veröffentlichungstag der Anmeldung: 17.09.2003
(73) Patentinhaber: ROBERT BOSCH GMBH, 70442 Stuttgart (DE)
(72) Erfinder: KIRCHHOFF, Karsten, 31196 Sehlem (DE)
(86) Internationale Anmeldenummer: PCT/DE2001/004691
(87) Internationale Veröffentlichungsnummer: WO 2002/047933

(56) Entgegenhaltungen:
- WO-A-99/50809
- DE-A- 19 717 636
- FR-A- 2 730 189
- US-A- 5 432 684

## Beschreibung

### Stand der Technik

Die Erfindung geht von einem Verfahren zur Herstellung eines Bedienelements mit beleuchtbarer Beschriftung, wobei auf einen, die Beschriftung tragenden transparenten Teil des Bedienelements eine farbgebende Decklackierung aufgebracht wird, und wobei die Beschriftung durch partiellen Abtrag der Decklackierung erzeugt wird sowie einem Bedienelement mit beleuchtbarer Beschriftung, wobei ein die Beschriftung tragender, aus transparentem Material bestehender Teil des Bedienelements durch eine Decklackierung bedeckt ist, und wobei die Beschriftung durch partiellen Abtrag der Decklackierung realisiert ist, nach der Gattung der unabhängigen Patentansprüche aus.

Bedienelemente mit beleuchtbarer Beschriftung sind beispielsweise aus dem Bereich von Fahrerinformationssystemen für Kraftfahrzeuge oder auch Autoradiogeräten.bekannt. Bei den genannten Geräten werden zum Zweck der Erkennbarkeit von Bedienelementen auch bei schlechten Beleuchtungsverhältnissen, insbesondere während der Nacht, die Bedienelemente ganz oder teilweise beleuchtet. Dazu werden die Bedienelemente zumindest teilweise aus einem transparenten Werkstoff hergestellt, der mit einem das äußere Erscheinungsbild des Bedienelements und damit auch des Geräts bestimmenden Decklack überzogen wird. Bei Geräten der Anmelderin wird der Decklack in der Form einer Beschriftung oder eines auf das Bedienelement aufzubringenden Symbols partiell abgetragen, so dass an diesen Stellen der transparente Werkstoff unter dem Decklack sichtbar wird. Im Falle eines hinterleuchteten Bedienelements dringen Lichtstrahlen, die in das transparente Teil des Bedienelements eingekoppelt sind, durch die Durchbrüche in der Decklackierung hindurch und vermitteln damit den Eindruck einer beleuchteten Beschriftung.

Um nun Bedienelemente mit unterschiedlicher Farbgestaltung und gleichzeitig ausreichendem Kontrast der Beschriftung zur Farbgebung des Bedienelements im Falle eines unbeleuchteten Bedienelements zu erreichen, werden gemäss dem Stand der Technik unterschiedliche transparente Werkstoffe verwendet. So werden beispielsweise im Fall eines mit einem hellen Decklack überzogenen Bedienelements dunkel eingefärbte transparente Materialien verwendet, um einen ausreichenden Kontrast zwischen der Beschriftung des Bedienelements und dem Decklack des Bedienelements im unbeleuchteten Zustand zu erreichen. Umgekehrt werden für dunkel lackierte Bedienelemente hell eingefärbte transparente Werkstoffe verwendet, so dass sich im unbeleuchteten Zustand eine durch den transparenten Werkstoff bestimmte Farbgebung der Beschriftung im unbeleuchteten Zustand vom dunklen Decklack abhebt.

Ein Verfahren zur Herstellung eines Bedienelementes sowie ein Bedienelement nach dem Oberbegriff der Ansprüche 1 bzw 3 ist bekannt aus DE-A-19717636.

### Vorteile der Erfindung

Das erfindungsgemäße Verfahren zur Herstellung eines Bedienelements mit beleuchtbarer Beschriftung, sowie das Bedienelement wobei auf einen, die Beschriftung tragenden transparenten Teil des Elements eine farbgebende Decklackierung aufgebracht wird, und wobei die Beschriftung durch partiellen Abtrag der Decklackierung erzeugt wird, mit den Merkmalen des unabhängigen Verfahrensanspruchs hat demgegenüber den Vorteil, dass zur Herstellung von Bedienelementen unterschiedlicher Farbgebung ein- und derselbe transparente Werkstoff verwendet werden können. Hierdurch wird die Herstellung und Bevorratung von Rohlingen aus unterschiedlich eingefärbten transparenten Materialien entbehrlich. Ebenso können Kosten für eine Einfärbung des Rohmaterials, wie auch die Lagerhaltung der verschieden eingefärbten Rohlinge eingespart werden.

Darüber hinaus kann vorteilhafterweise auf eine Einfärbung des transparenten Materials verzichtet werden, so dass dessen lichtleitende Eigenschaften gegenüber dem Stand der Technik verbessert werden. Damit ergibt sich eine verbesserte Beschriftungs- beziehungsweise Symbolausleuchtung im Falle beleuchteter Bedienelemente. Darüber hinaus wird ein Differieren der Beleuchtungsfarbe zwischen unterschiedlich eingefärbten Bedienelementen bei ein- und demselben Gerät vermieden.

Diese Vorteile werden dadurch erzielt, dass bei einem gattungsgemäßen Verfahren vor dem Decklackauftrag auf den transparenten Teil eine, vorzugsweise eine zum Decklack hohen Kontrast aufweisende, Grundlackierung aufgebracht wird und dass die Beschriftung durch partiellen Abtrag mindestens der Decklackierung erzeugt wird.

Analoge Vorteile ergeben sich für ein Bedienelement mit beleuchtbarer Beschriftung, wobei ein die Beschriftung tragender, aus transparentem Material bestehender Teil des Bedienelements durch eine Decklackierung bedeckt ist, und wobei die Beschriftung durch partiellen Abtrag der Decklackierung realisiert ist, welches sich dadurch auszeichnet, dass unter der Decklackierung auf dem transparenten Teil eine, vorzugsweise einen zum Decklack hohen Kontrast aufweisende, Grundlackierung aufgebracht ist, und dass die Beschriftung durch partiellen Abtrag mindestens der Decklackierung realisiert ist, gemäss dem unabhängigen Sachanspruch.

Vorteilhafte Ausführungsformen beziehungsweise Weiterbildungen der Erfindung sind in den abhängigen Patentansprüchen angegeben.

So ist es von besonderem Vorteil, dass bei einem Verfahren gemäss dem unabhängigen Verfahrensanspruch für den Grundlack eine dunkle und für den Decklack eine helle Farbe gewählt wird, und dass die Beschriftung durch partiellen Abtrag sowohl der Deck- als auch der Grundlackierung erzeugt wird.

Hierdurch wird auch für ein unbeleuchtetes Bedienelement ein hoher Kontrast zwischen der Bedienelementbeschriftung und der Decklackierung erreicht. So bewirkt nämlich eine dunkle Grundlackierung eine virtuelle Einfärbung des an sich neutralen transparenten Materials, so dass dieses bei unbeleuchtetem Bedienelement im Bereich der Beschriftung dunkel erscheint. Gleichzeitig bewirkt jedoch diese virtuelle Einfärbung des transparenten Materials keine Erhöhung des Lichtleitwiderstandes.

Ein umgekehrter Effekt ergibt sich bei Wahl eines hellen Grundlacks und eines dunklen Decklacks. In diesem Fall bewirkt die helle Grundlackierung eine virtuelle Einfärbung des transparenten Grundmaterials, so dass im Falle eines unbeleuchteten Bedienelements dessen Beschriftung hell erscheint und somit einen hohen Kontrast zur dunklen Decklackierung darstellt.

In diesem Fall kann es genügen, zum Aufbringen eines Symbols oder einer Beschriftung nur den Decklack partiell aufzubringen, sofern der Grundlack für eine Hinterleuchtung ausreichend transparent ist.

Vorteilhafterweise wird zur Beleuchtung der Beschriftung eines erfindungsgemäßen Bedienelements eine Lichtquelle vorgesehen, deren Licht in den transparenten Teil des Bedienelements eingekoppelt ist.

Gemäss einer besonders vorteilhaften Ausführungsform der Erfindung ist vorgesehen, dass der transparente Teil außerhalb der Beschriftung und außerhalb des für den Benutzer sichtbaren Bereichs, vorzugsweise auf einer Rückseite des Bedienelements, die in das zu bedienende Gerät hineinragt, eine nicht lackierte Fläche aufweist, über die das Licht der Lichtquelle einkoppelbar ist.

### Zeichnungen

Ausführungsbeispiele der Erfindung sind in den Figuren dargestellt und werden nachfolgend näher erläutert.

Es zeigen
Figur 1 einen Teil einer Frontkappe eines Autoradios mit den darauf realisierten Bedienelementen,
Figur 2 einen ersten Schnitt durch das in Figur 1 dargestellte Frontkappenteil,
Figur 3 einen weiteren Schnitt durch das in Figur 1 dargestellte Frontkappenteil und
Figur 4 einen Schnitt durch ein auf der Frontkappe gemäss Figur 1 realisierten Bedienelements.

### Beschreibung der Ausführungsbeispiele

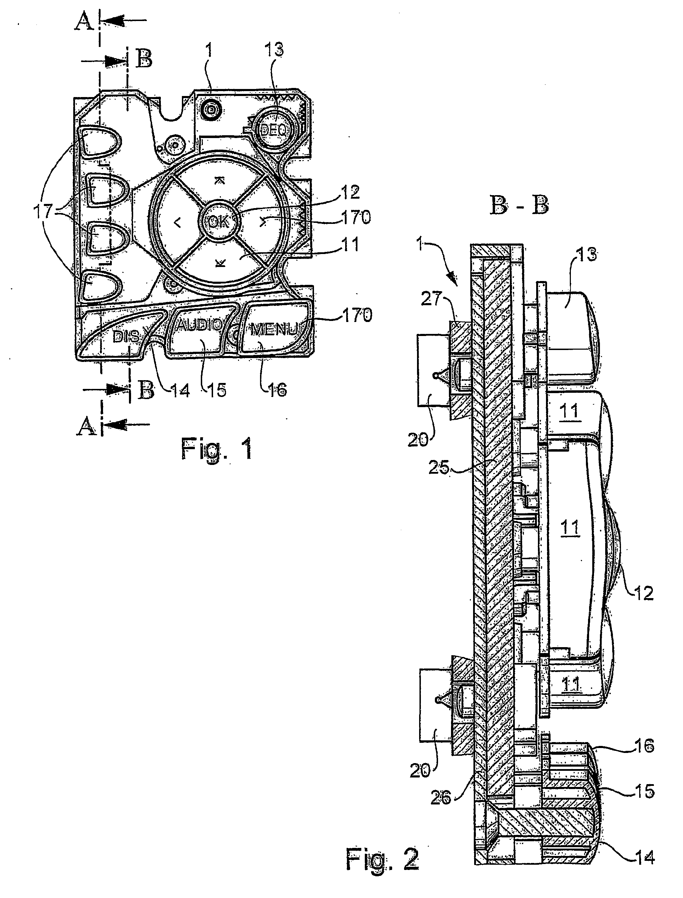

Figur 1 zeigt einen Teil einer bei einem Autoradiogerät realisierten Frontkappe 1 mit darin realisierten Bedienelementen. Die Frontkappe 1 weist mit einem dunklen farbgebenden Decklack versehene Bedienelemente 12, 13 und 17 auf. Beispielsweise weist die Bestätigungstaste 12, die mit einer Beschriftung "OK" versehen ist, eine schwarze Decklackierung, eine weitere Drucktaste 13, die mit "DEQ" beschriftet ist, eine dunkelblaue Decklackierung, und sogenannte Softkeys 17, die mit der Beschriftung "-" versehen sind, und die Zeilen eines daneben angeordneten, in der Figur nicht dargestellten, Displays zugeordnet sind, eine schwarze Decklackierung auf. Demgegenüber weisen Cursortasten 11, die mit Pfeilsymbolen versehen sind und weitere Bedienelemente 14 mit der Beschriftung "DIS", 15 mit der Beschriftung "AUDIO" und 16 mit der Beschriftung "MENU" eine silberfarbene Decklackierung auf.

Figur 2 zeigt einen Schnitt A durch das in Figur 1 dargestellte Teil der Frontkappe 1 des Autoradiogeräts mit den Cursortasten 11, der "OK"-Taste 12, der "DEQ"-Taste 13, der "DIS"-Taste 14, der "AUDIO"-Taste 15 und der "MENU"-Taste 16. Die Tasten beziehungsweise Bedienelemente sind zu ihrer Hinterleuchtung auf einem Lichtleiter 25 angeordnet, in den Licht von Lichtquellen 20, beispielsweise in Form von Leuchtdioden, eingekoppelt wird. Unter dem Lichtleiter ist eine, vorzugsweise ebenfalls aus einem transparenten Werkstoff gefertigte, Schaltmatte 26 angeordnet.

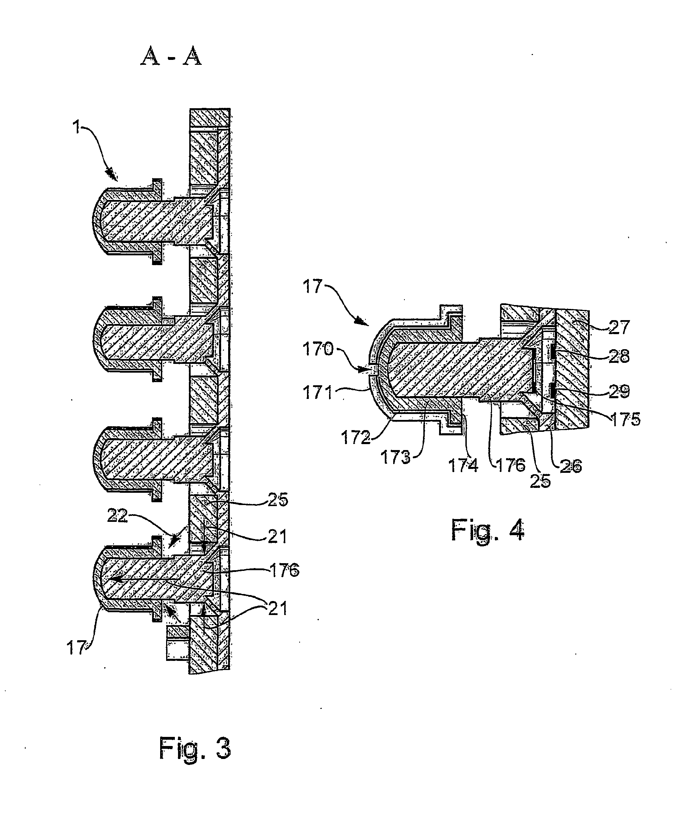

Figur 3 zeigt einen Schnitt B durch die Autoradiofrontkappe 1 im Bereich der Softkeys 17.

Das in den Lichtleiter 25 eingekoppelte Licht der Lichtquellen 20 tritt aus diesem in einen transparenten Grundkörper 176 des Bedienelements 17 ein. Der transparente Grundkörper des Bedienelements ist vorzugsweise, wie auch die Schaltmatte 26, aus Silikon gefertigt und mit der Schaltmatte 26 über dünne Stege verbunden. Somit wird auch in die Schaltmatte eingekoppeltes Licht über die Stege in den Grundkörper 176 des Bedienelements eingekoppelt. Weiterhin wird aus dem Grundkörper 176 des Bedienelements, insbesondere aber auch aus dem Lichtleiter 25 austretendes Streulicht 22 in eine aus transparentem Material hergestellte Kappe des Bedienelements eingekoppelt.

Figur 4 zeigt eine vergrößerte Ansicht eines Bedienelements 17. Auf der Unterseite des Grundkörpers 176 des Bedienelements 17 ist ein metallischer Kontaktring 175 angeordnet, der bei Druck auf das Bedienelement auf der Oberseite einer Leiterplatte 27 angeordnete Leiterbahnen beziehungsweise Kontakte 28 und 29 zur Auslösung eines Schaltvorgangs miteinander elektrisch verbindet. Die Kappe 173 des erfindungsgemäßen Bedienelements besteht aus transparentem Material, das durch eine Grundlackierung 172 und eine darüber angebrachte Decklackierung 171 bedeckt wird. Im Bereich der Beschriftung beziehungsweise eines auf das Bedienelement aufgebrachten Symbols weisen sowohl Grundals auch Decklackierung 172, 171 eine Lücke auf, durch die hindurch in die Bedienelementkappe 173 eingekoppeltes hindurchtreten kann.

Um die Einkopplung von Licht in die Bedienelementkappe 173 zu erleichtern, oder im Falle eines nicht transparenten Bedienelementgrundkörpers 176 überhaupt zu ermöglichen, ist die Bedienelementkappe an ihrer Unterseite 174 nicht lackiert. Somit kann in den Lichtleiter 25 eingekoppeltes Licht und von diesem ausgehendes Streulicht 22 in die Unterseite der Bedienelementkappe 173 eingekoppelt und durch diese hindurch zur Lücke 170 in der Lackierung geleitet werden.

Die Grundlackierung 172 der Bedienelementkappe 173 beziehungsweise des transparenten Teils des Bedienelements 17 hat die Funktion einer virtuellen Einfärbung des transparenten Materials des Bedienelements 17 beziehungsweise dessen Kappe 173. So bewirkt eine dunkle Grundlackierung eine virtuelle dunkle Einfärbung des transparenten Materials, so dass bei unbeleuchtetem Bedienelement das Symbol 170 auf der Oberseite des Bedienelements dunkel erscheint.

Umgekehrt hat eine helle Grundlackierung des Bedienelements den Effekt, dass das Symbol oder die Beschriftung 170 des Bedienelements 17 bei unbeleuchtetem Bedienelement hell erscheint.

Zur Herstellung eines erfindungsgemäßen Bedienelements wird die Bedienelementkappe 173 zunächst mit einer Grundlackierung versehen, die den optischen Eindruck, nämlich den Eindruck über die Farbe der Beschriftung bestimmt. In einem anschließenden Schritt wird das Bedienelement beziehungsweise die Bedienelementkappe 173 mit einer die Farbgebung des Bedienelements bestimmenden Decklackierung 171 überzogen. In einem letzten Verfahrensschritt werden sowohl Grund- als auch Decklackierung im Bereich der Beschriftung beziehungsweise eines aufzubringenden Symbols, beispielsweise mittels eines dazu geeigneten Lasers, abgetragen, so dass im Bereich des Abtrags das transparente Grundmaterial in Form der Beschriftung oder des Symbols durch den Decklack hindurchscheint.

Alternativ zu oben beschriebenem Herstellungsverfahren kann der Auftrag einer besonders dünn ausgeführten Grundlackierung mit vorzugsweise besonders lichtdurchlässigem Lack durchgeführt werden.

## Patentansprüche

1. Verfahren zur Herstellung eines Bedienelements (17) mit beleuchtbarer Beschriftung (170), wobei auf einen, die Beschriftung tragenden transparenten Teil (173) des Bedienelements eine farbgebende Decklackierung (171) aufgebracht wird, wobei vor dem Decklackauftrag auf den transparenten Teil (173) eine, vorzugsweise einen zum Decklack hohen Kontrast aufweisende, Grundlackierung (172) aufgebracht wird, **dadurch gekennzeichnet, dass** die Beschriftung durch partiellen Abtrag der Grund- und der Decklackierung erzeugt wird,
und
dass die Grundlackierung einer Einfärbung des transparenten Teils (173) in ihrer Eigenfarbe dient.

2. Verfahren nach Anspruch 1, **dadurch gekennzeichnet, dass** für den Grundlack eine dunkle und für den Decklack eine helle Farbe gewählt wird.

3. Bedienelement (17) mit beleuchtbarer Beschriftung (170), wobei ein die Beschriftung (170) tragender, aus transparentem Material bestehender Teil (173) des Bedienelements durch eine farbgebende Decklackierung (171) bedeckt ist, wobei zwischen Decklackierung (171) und transparentem Teil (173) eine, vorzugsweise einen zum Decklack hohen Kontrast aufweisende, Grundlackierung (172) aufgebracht ist, **dadurch gekennzeichnet, dass** die Beschriftung durch partiellen Abtrag der Grund- und der Decklackierung erzeugt ist,
und
dass die Grundlackierung einer Einfärbung des transparenten Teils (173) in ihrer Eigenfarbe dient.

4. Bedienelement nach Anspruch 3, **dadurch gekennzeichnet, dass** der Grundlack (172) eine dunkle und der Decklack (171) eine helle Farbe aufweist.

5. Bedienelement nach einem der Ansprüche 3 oder 4, **dadurch gekennzeichnet, dass** zur Beleuchtung der Beschriftung (170) eine Lichtquelle (20) vorgesehen ist, deren Licht in den transparenten Teil (173) des Bedienelements eingekoppelt ist.

6. Bedienelement nach Anspruch 5, **dadurch gekennzeichnet, dass** der transparente Teil (173) außerhalb der Beschriftung, vorzugsweise auf einer Rückseite des Bedienelements, eine nicht lackierte Fläche (174) aufweist, über die das Licht der Lichtquelle (20) einkoppelbar ist.

## Claims

1. Method for the production of an operating element (17) with illuminable script (170), wherein a cover coating (171) is applied onto a transparent part (173) of the operating element which carries the script and a base coating (172), preferably having a high contrast with the cover coating, is applied onto the transparent part (173) before the cover coat application, **characterized in that** the script is produced by partial erosion of the base and cover coatings, and **in that** the base coating is used for colouring the transparent part (173) in its own colour.

2. Method according to Claim 1, **characterized in that** a dark colour is selected for the base coat and a light colour is selected for the cover coat.

3. Operating element (17) with illuminable script (170), wherein a part (173) of the operating element which carries the script (170) and consists of a transparent material is covered with a colouring cover coating (171) and a base coating (172), preferably having a high contrast with the cover coat, is applied between the cover coating (171) and the transparent part (173), **characterized in that** the script is produced by partial erosion of the base and cover coatings, and **in that** the base coating is used for colouring the transparent part (173) in its own colour.

4. Operating element according to Claim 3, **characterized in that** the base coat (172) has a dark colour and the cover coat (171) has a light colour.

5. Operating element according to Claim 3 or 4, **characterized in that** a light source (20), the light from which is coupled into the transparent part (173) of the operating element, is provided in order to illuminate the script (170).

6. Operating element according to Claim 5, **characterized in that** the transparent part (173) has an uncoated surface (174) outside the script, preferably on a rear side of the operating element, through which the light from the light source (20) can be coupled in.

## Revendications

1. Procédé de production d'un élément de manoeuvre (17) présentant une inscription pouvant être éclairée (170), selon lequel on applique une couche colorée de vernis de finition (171) sur une partie transparente (173) porteuse de l'inscription, de l'élément de manoeuvre après avoir déposé préalablement à l'application du vernis de finition sur la partie transparente (173), une couche de vernis de base (172) présentant de préférence un fort contraste par rapport au vernis de finition,
**caractérisé en ce que**
l'inscription est effectuée par enlèvement partiel de la couche de vernis de base et du vernis de finition, et
la couche de vernis de base sert à teinter la partie transparente (173) dans sa couleur propre.

2. Procédé selon la revendication 1,
**caractérisé en ce qu'**
on choisit un vernis de base de couleur sombre et un vernis de finition de couleur claire.

3. Elément de manoeuvre (17) présentant une inscription pouvant être éclairée (170), dans lequel une couche colorée de vernis de finition (171) recouvre une partie (173) de l'élément de manoeuvre réalisée dans un matériau transparent et porteuse de l'inscription, avec entre la couche de vernis de finition (171) et la partie transparente (173), une couche de vernis de base (172) présentant de préférence un fort contraste par rapport au vernis de finition,
**caractérisé en ce que**
l'inscription est effectuée par enlèvement partiel de la couche de vernis de base et de la couche de vernis de finition, et
la couche de vernis de base sert à teinter la partie transparente (173) dans sa couleur propre.

4. Elément de manoeuvre selon la revendication 3,
**caractérisé en ce que**
le vernis de base (172) est de couleur sombre et le vernis de finition (171) de couleur claire.

5. Elément de manoeuvre selon la revendication 3 ou 4,
**caractérisé en ce qu'**
pour éclairer l'inscription (170), on prévoit, une source lumineuse (20) dont la lumière est couplée dans la partie transparente (173) de l'élément de manoeuvre.

6. Elément de manoeuvre selon la revendication 5,
**caractérisé en ce que**
la partie transparente (173) présente une surface non vernie (174) située en dehors de l'inscription, de préférence au dos de l'élément de manoeuvre, cette surface permettant le couplage de la lumière issue de la source lumineuse (20).
